# EUROPÄISCHE PATENTANMELDUNG

(11) **EP 0 857 002 A2**
(43) Veröffentlichungstag der Anmeldung: **05.08.1998**
(21) Anmeldenummer: 98101829.4
(22) Anmeldetag: 03.02.1998
(51) Int. Cl.: H04Q 11/04

(54) **Verfahren zum Ersatzschalten von Übertragungseinrichtung in Ringarchitekturen zur bidirektionalen Übertragung von ATM-Zellen**

(30) Priorität: 03.02.1997 DE 19703992
(71) Anmelder: SIEMENS AKTIENGESELLSCHAFT, 80333 München (DE)
(72) Erfinder: Klink, Joachim, 81369 München (DE)

(57) **Zusammenfassung**

Die Ersatzschaltung von ATM-Zellen wird beim Stand der Technik unter der Verwendung von linearen Strukturen effizient gesteuert. Um diese Strukturen auch auf ringförmige Architekturen übertragen zu können, wird erfindungsgemäß aus linearen Strukturen eine ringförmige Struktur ausgebildet, indem in den Übertragungsabschnitt einer linearen Struktur weitere lineare Strukturen eingebunden werden, und die Vermittlungseinrichtungen der ursprünglichen linearen Struktur zusammengeführt werden. Weiterhin teilen sich erfindungsgemäß eine Mehrzahl von Ersatzstrecken eine gemeinsam reservierte Übertragungskapazität.

## Beschreibung

Die Erfindung betrifft ein Verfahren gemäß dem Oberbegriff des Patentanspruch 1.

Eine derartiges Verfahren ist bereits aus der deutschen Patentanmeldung DE 19646016.6 bekannt.

Bei diesem bekannten Verfahren sind Übertragungseinrichtungen zur bidirektionalen Übertragung von ATM-Zellen vorgesehen, bei der zwei als Endstellen fungierende Vermittlungseinrichtungen über eine Mehrzahl von Betriebsstrecken (Working Entity) und eine den Betriebsstrecken gemeinsame Ersatzstrecke (Protection Entity) miteinander verbunden sind. Die beiden Endstellen enthalten jeweils eine Überwachungsvorrichtung pro Betriebsstrecke zur Feststellung von Übertragungsstörungen. Eine durch die Überwachungsvorrichtung steuerbare Schaltvorrichtung verbindet die sendende Endstelle in einem ersten Schaltzustand mit der Betriebsstrecke und in einem zweiten Schaltzustand mit der Ersatzstrecke. Zwischen den Steuervorrichtungen der beiden Endstellen werden Steuerinformationen ausgetauscht. Die Schaltvorrichtung wird jeweils durch die örtliche Überwachungsvorrichtung in Abhängigkeit von örtlichen und in den von der Gegenstelle empfangenen Steuerinformationen enthaltenen Steuerkriterien gesteuert.

Nachteilig hieran ist, daß bei diesem bekannten Verfahren lediglich das Ersatzschalten von Übertragungseinrichtungen zwischen zwei Endstellen angesprochen ist. Da insbesondere im Teilnehmeranschlußnetz Ringarchitekturen Verwendung finden, kann dieses Verfahren nicht verwendet werden.

Der Erfindung liegt die Aufgabe zugrunde, ein Verfahren der eingangs genannten Art derart weiterzubilden, daß Zellen, die nach einem asynchronen Transfermodus übertragen werden, mit großer Sicherheit über eine Mehrzahl von Netzknoten übertragen werden können.

Die Erfindung wird ausgehend von den im Oberbegriff des Patentanspruchs 1 angegebenen Merkmale durch dessen kennzeichnende Merkmale gelöst.

Vorteilhaft an der Erfindung ist insbesondere, daß eine Mehrzahl von Ersatzstrecken sich eine gemeinsam reservierte Übertragungskapazität teilen.

Vorteilhafte Weiterbildungen der Erfindung sind in den Unteransprüchen anggegeben.

Die Erfindung wird im folgenden anhand eines Ausführungsbeispiels näher erläutert.

Es zeigen:
- Figur 1: Eine Konfiguration zur bidirektionalen Übertragung von ATM-Zellen in einer linearen 1:1-Struktur,
- Figur 2: eine ringförmige Konfiguration, auf der das erfindungsgemäße Verfahrens zum Ablauf gelangt,
- Figur 3: das erfindungsgemäße Verfahren im Falle eines einfachen Fehlers,
- Figur 4: das erfindungsgemäße Verfahren im Falle eines Doppelfehlers,

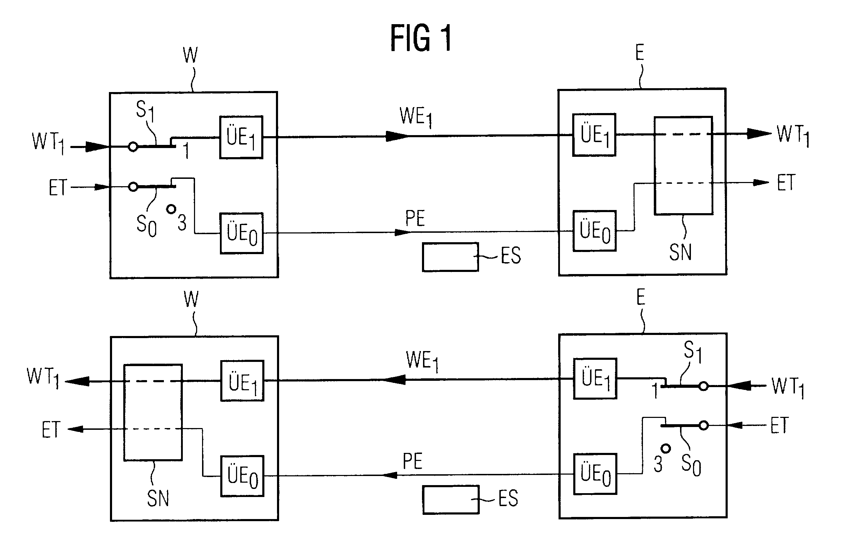

Gemäß Fig. 1 sind zwei Knoten eines ATM-Netzes aufgezeigt, welche jeweils als Vermittlungseinrichtung W, E ausgebildet sind. In vorliegendem Ausführungsbeispiel wird davon ausgegangen, daß es sich bei diesen Vermittlungseinrichtungen um Cross Connect Vermittlungseinrichtungen handelt. Die Verwendung derart ausgebildeter Vermittlungseinrichtungen bedeutet jedoch keine Einschränkung der Erfindung,andere Vermittlungseinrichtungen sind ebenso verwendbar. In Fig. 1 ist die Übertragung von ATM-Zellen von der Vermittlungseinrichtung W zur Vermittlungseinrichtung E hin und zurück aufgezeigt, es handelt sich somit um eine bidirektionale Verbindung.

Die ATM-Zellen werden nach einem asynchronen Transfermodus übertragen und weisen jeweils einen Kopfteil sowie einen Informationsteil auf. Der Kopfteil dient der Aufnahme von Verbindungsinformation während der Informationsteil der Aufnahme von Nutzinformation dienlich ist. Die im Kopfteil enthaltene Verbindungsinformation ist als logische Information ausgebildet und wird in der Regel als virtuelle Pfadnummer VPI bzw. virtuelle Kanalnummer VCI ausgebildet. Dabei sind eine Mehrzahl dieser virtuellen Kanalnummern VCI jeweils zu einer virtuellen Pfadnummer VPI zusammengefaßt.

Die Vermittlungseinrichtungen W,E sind über Betriebsstrecken (WORKING ENTITY), die gemäß vorliegendem Ausführungsbeispiel als eine einzige Betriebsstrecke WE₁ ausgebildet sein sollen, sowie eine Ersatzstrecke PE (PROTECTION ENTITY) miteinander verbunden sind. Weiterhin sind Schaltereinrichtungen S₀ , S₁ (BRIDGE) aufgezeigt,über die die ankommenden ATM-Zellen wahlweise über die Betriebsstrecke WE₁ oder die Ersatzstrecke PE zur Vermittlungseinrichtung E hin übertragen werden.

Weiterhin sind Fig. 1 Selektionseinrichtungen SN entnehmbar, deren Aufgabe darin besteht, die über die Betriebsstrecke WE₁ übertragenen ATM-Zellen dem Ausgang der Vermittlungseinrichtung E zuzuführen. Gemäß vorliegendem Ausführungsbeispiel sind die Selektionseinrichtungen SN als ATM-Koppelfeld ausgebildet. Da es sich um bidirektionale Verbindungen handelt, ist das ATM-Koppelfeld SN sowohl in der Vermittlungseinrichtung W als auch der Vermittlungseinrichtung E enthalten.

Weiterhin sind in beiden Vermittlungseinrichtungen W, E Überwachungsvorrichtungen ÜE₀ , ÜE₁ (PROTECTION DOMAIN SINK, PROTECTION DOMAIN SOURCE) aufgezeigt, die den Zustand bzw. die Qualität der über die Betriebstrecke WE₁ übertragenen ATM-Zellen überwachen. Beispielsweise werden die ATM-Zellen der Verbindung mit der Nummer 1 WT₁ bevor sie über die Betriebsstrecke WE₁ zur Vermittlungseinrichtung E hin übertragen werden, in der Überwachungseinrichtung ÜE₁ der Vermittlungseinrichtung W mit Steuerinformation versehen, die die Überwachungseinrichtung ÜE₁ der empfangenden Vermittlungseinrich-tung E entnimmt und überprüft. Anhand dieser Steuerinformation kann dann ermittelt werden, ob die Übertragung der ATM-Zelle korrekt erfolgt ist oder nicht. Insbesondere kann hier ein Totalausfall (SIGNAL FAIL FOR WORKING ENTITY) der Betriebsstrecke WE₁ ermittelt werden. Ebenso sind aber auch unter Verwendung bekannter Verfahren Verschlechterungen in der Übertragungsqualität (SIGNAL DEGRADE) ermittelbar.

Die Überwachungsvorrichtung ÜE₁ schließen die Betriebsstrecke WE₁ auf beiden Seiten ab. Weitere Überwachungsvorrichtungen ÜE₀ sind auf beiden Enden der Ersatzstrecke PE angeordnet. Diese soll im Fehlerfall als Übertragungsstrecke für die außer Betrieb genommene Betriebsstrecke WE₁ dienen. Weiterhin werden hierüber Ersatzschalteprotokolle ES übertragen, so daß die Intaktheit der Ersatzstrecke oberste Priorität hat.

In jeder der Vermittlungseinrichtungen W, E sind ferner in Fig. 1 nicht aufgezeigte zentrale Steuereinrichtungen angeordnet. Diese beinhalten jeweils lokale und globale Prioritätstabellen. Bei ersteren wird Zustand und Priorität der lokalen Vermittlungseinrichtung abgespeichert, während bei letzteren Zustand und Priorität sowohl der lokalen als auch der verbleibenden Vermittlungseinrichtung abgespeichert ist. Durch die Einführung der Prioritäten wird erreicht, daß - im Falle des Vorhandenseins mehrerer Betriebstrecken - beim gleichzeitigen Auftreten mehrerer Ersatzschalteanforderungen festgelegt ist, welche Betriebstrecke ersatzzuschalten ist. Ebenso sind in den Prioritätstabellen die Ersatzschalteanforderungen priorisiert. So besteht beispielsweise eine hochpriore Anforderung von einem Anwender. Da dieser Ersatzschalteanforderung eine hohe Priorität zugewiesen ist, wird sie somit bevorzugt gesteuert. Eine von einer der Betriebsstrecken gesteuerte Ersatzschalteanforderung wird somit zurückgewiesen.

Die zentralen Steuereinrichtungen der Vermittlungseinrichtungen W, E tauschen Informationen in einem Ersatzschalteprotokoll ES aus. Dieses Protokoll wird über die Ersatzstrecke PE übertragen und von der zugeordneten Überwachungseinrichtung ÜE₀ der jeweils empfangenden Vermittlungseinrichtung entnommen, und der betreffenden zentralen Steuereinrichtung zugeführt.Weiterhin wird in der zentralen Steuervorrichtung dafür Sorge getragen, daß im Fehlerfall die Schaltvorrichtungen S₀ , S₁ in entsprechender Weise gesteuert werden.

Im Protokoll ES sind Informationen bezüglich der momentanen Zustände der Schaltvorrichtungen abgelegt. Weiterhin sind noch weitere Informationen bezüglich der generierten Ersatzschalteanforderung gespeichert. Das Protokoll wird jeweils bei Generierung der Ersatzschalteanforderung zwischen den beiden Vermittlungseinrichtungen ausgetauscht. In einer speziellen Ausgestaltung der Erfindung wird vorgesehen, das Protokoll ES zyklisch zwischen beiden Vermittlungseinrichtungen zu übertragen.

Gemäß Fig. 1 werden die ATM-Zellen im intakten Betriebsfall der Vermittlungseinrichtung E zugeführt. Die ATM-Zellen gehören dabei der Verbindung WT₁ an. Die einzelnen Verbindungen werden anhand der im Kopfteil der ATM-Zellen eingetragenen logischen Verbindungsnummer VPI unterschieden.

Die Schaltvorrichtungen S₀ ,S₁ der Vermittlungseinrichtung W sind in diesem (noch intakten) Betriebsfall derart geschaltet, daß die ATM-Zellen der Überwachungseinrichtung ÜE₁ unmittelbar zugeführt werden. Hier werden die ATM-Zellen mit den bereits angesprochenen Steuerinformationen beaufschlagt und über die Betriebsstrecke WE₁ der Überwachungseinrichtungen ÜE₁ der empfangenden Vermittlungseinrichtung E zugeführt. Dort wird die mitgeführte Steuerinformation überprüft und gegebenenfalls ein Fehlerfall ermittelt. Ist die Übertragung korrekt erfolgt, werden die ATM-Zellen dem ATM-Koppelfeld SN zugeführt. Hier wird die logische Verbindungsinformation VPI ausgewertet und nach Maßgabe dieser Auswertung die ATM-Zelle über dem in Frage kommenden Ausgang des Koppelfeldes SN in das ATM Netz weitergeleitet.

Die Ersatzstrecke PE kann während dieser Zeit ungenutzt bleiben. Gegebenenfalls können aber auch während dieser Zeit Sonderdaten (EXTRA TRAFFIC) der Vermittlungseinrichtung E zugeführt werden. Die Schaltvorrichtung S₀ der Vermittlungseinrichtung W nimmt also die Stellungen 1 oder 3 ein. Die Übertragung der Sonderdaten erfolgt ebenfalls in ATM-Zellen. Die Überwachungseinrichtung ÜE₀ der der Vermittlungseinrichtung W beaufschlagt die ATM-Zellen in gleicher Weise mit Steuerinformationen wie dies im Falle der über die Betriebsstrecke WE₁ bereits geschildert wurde. Ebenso erfolgt die Überwachung der Strecke. Als Sonderdaten können dabei Steuerdaten allgemeiner Art verwendet werden. Erfindungsgemäß können die Sonderdaten auch als spezielle Verkehrsdaten ausgebildet sein. Beispielsweise kommen hierbei ABR (Available Bit Rate) oder UBR (Unspecified Bit Rate) Verkehrsdaten in Betracht,da die diese Daten benutzenden Dienste kostengünstig sind.

Im folgenden wird nun davon ausgegangen, daß die Betriebsstrecke WE ausgefallen ist. Dies wird von der dieser zugeordneten Überwachungseinrichtung ÜE₁ der empfangenden Vermittlungseinrichtung E ermittelt. Die Ersatzschalteanforderung wird nun zur betreffenden zentralen Steuereinrichtung übermittelt, und dort in der lokalen Prioritätstabelle sowie der globalen Prioritätstabelle abgelegt.

Nach Maßgabe der in der globalen Prioritätstabelle abgespeicherten Prioritäten wird nun ermittelt, ob noch höher priore Anforderungen anstehen.Dies könnte beispielsweise die bereits angesprochene Umschalteanforderung des Anwenders (FORCED SWITCH FOR WORKING ENTITY) sein. Sind keine höher priorisierten Anforderungen vorhanden, wird die Schaltvorrichtung S₁ der Vermittlungseinrichtung E in den verbleibenden Betriebszustand gesteuert, wie in Fig. 1 aufgezeigt. Im folgenden wird nun das Ersatzschalteprotokoll Es über die Ersatzstrecke PE der Vermittlungseinrichtung W zugeführt. In diesem Ersatzschalteprotokoll sind die bereits angesprochenen Informationen enthalten. Wesentlich ist, daß die lokale Prioritätslogik die Ausgestaltung der Information bezüglich der generierten Ersatzschalteanforderung definiert, und die globale Prioritätslogik die Stellung der Schaltvorrichtung S₀.

Von der Überwachungseinrichtung ÜE₀ der Vermittlungseinrichtung E wird nun das Ersatzschalteprotokoll ES übernommen und der zentralen Steuereinrichtung der Vermittlungseinrichtung W zugeführt. Liegen auch hier in der globalen Prioritätstabelle keine weiteren höherpriorisierten Anforderungen an, so wird auch hier die Schaltvorrichtung S₁ in entsprechender Weise angesteuert und eingestellt. Weiterhin wird die Schaltvorrichtung S₀ der Vermittlungseinrichtung W ebenfalls umgelegt. Der neue Status der beiden Schaltvorrichtungen S₀, S₁ wird der Vermittlungseinrichtung E quittiert, und in der dortigen globalen Prioritätstabelle aktualisiert. Die ATM-Zellen der Verbindung WT₁ werden somit über die Ersatzstrecke PE der Vermittlungseinrichtung E zugeführt.

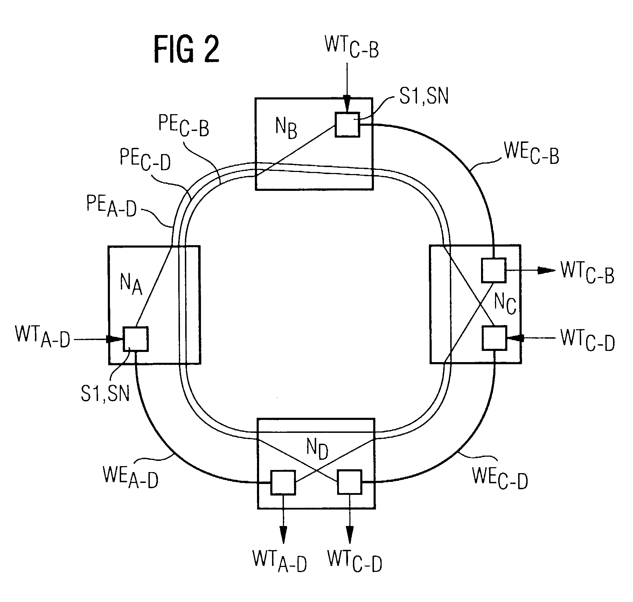

In Fig. 2 ist eine Konfiguration offenbart, auf der das erfindungsgemäße Verfahren zum Ablauf gelangt.Die Vermittlungseinrichtungen sind dabei so geschaltet, daß sich ein geschlossener Ring ergibt. Gemäß vorliegendem Ausführungsbeispiel soll dabei dieser Ring aus linearen Verbindungsabschnitten aufgebaut sein, wie sie gemäß Fig. 1 aufgezeigt sind. Dabei handelt es sich bekanntermaßen um die 1:1-Struktur.

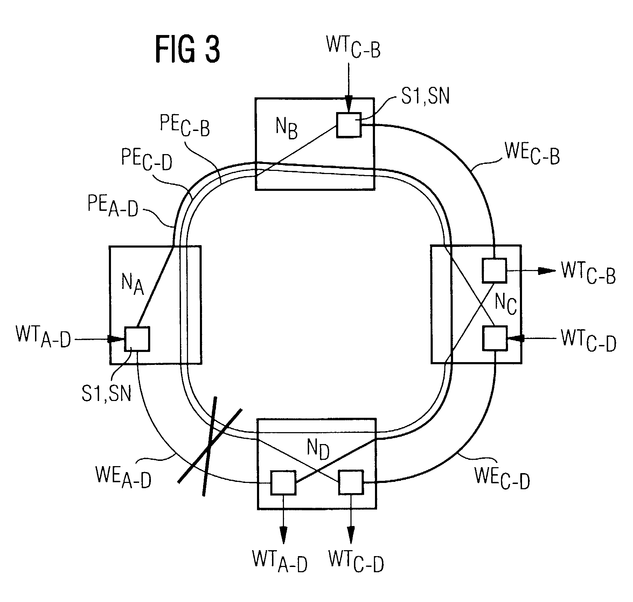

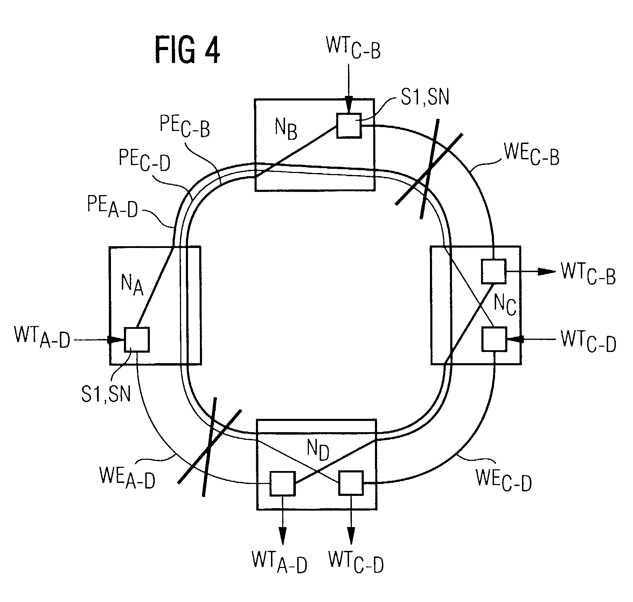

Demgemäß sind Fig. 2 eine Mehrzahl von Vermittlungseinrichtungen entnehmbar. Dies sind die Vermittlungseinrichtungen N_{A}, N_{B}, N_{C} sowie N_{D}. Jeweils zwei dieser Vermittlungseinrichtungen schließen dabei Übertragungsabschnitte ab. Am Beispiel der Vermittlungseinrichtungen N_{A},N_{D} sind dies die Betriebsstrecke WE_{A-D} sowie die Ersatzstrecken PE_{C-D}, PE_{C-B}. In gleicher Weise schließen die beiden Vermittlungseinrichtungen N_{A},N_{B} die Verbindungsabschnitte PE_{A-D}, PE_{C-D} sowie PE_{C-B} ab. Bei letzteren handelt es sich bekanntermaßen um jeweils zugeordneten Ersatzstrecken. Gemäß Fig. 2 (sowie auch Fig. 3, Fig. 4) sind die Betriebsstrecken durch einen dickeren Strich hervorgehoben, während die Ersatzstrecken lediglich durch einen dünnen Strich gekennzeichnet sind.

Weiterhin sind allen Vermittlungseinrichtungen Schalteinrichtungen S₁, SN entnehmbar, die mit den gemäß Fig. 1 aufgezeigten Schalteinrichtungen identisch sind. Zum einfacheren Veständnis wird hier auf eine detailliertere Offenbarung im Sinne einer Auteilung in die Schalteinrichtungen S₁, SN verzichtet. In allen Vermittlungseinrichtungen sind - hier ebenfalls nicht näher aufgezeigte - zentrale Steuereinrichtungen mit lokalen und globalen Prioritätstabellen angeornet. Die Funktionsweise wurde bereits im Falle der Verwendung einer linearen Anordnung gemäß Fig. 1 näher erläutert.

Gemäß vorliegendem Ausführungsbeispiel soll nun davon ausgegangen werden,daß eine Verbindung WT_{A-D} über den Ring zwischen zwei Teilnehmerendeinrichtungen geführt werden soll. Dabei werden die dieser Verbindung zugehörigen ATM-Zellen der Vermittlungseinrichtung N_{A} zugeführt und über die jeweils aktive Betriebsstrecke WE_{A-D} zur Vermittlungseinrichtung N_{D} geleitet, wo die der Verbindung WT_{A-D} zugehörigen ATM-Zellen den Ring wieder verlassen.

Gemäß Fig. 2 ist durch die Vorgabe eines Pfeiles die Richtung angezeigt, mit der diese ATM-Zellen in den Ring eindringen und wieder verlassen. Da es sich jedoch bei dieser Verbindung um eine bidirektionale Verbindung handelt, werden die zur betreffenden Rückrichtung gehörenden ATM-Zellen über dieselben Verbindungsabschnitte geleitet. Dies bedeutet, daß die zu der Rückrichtung angehörenden ATM-Zellen über die Vermittlungseinrichtung N_{D} in den Ring eindringen, über die Verbindung WE_{A-D} zur Vermittlungseinrichtung N_{A} geführt werden und dort den Ring wieder verlassen. Zur besseren Übersichtlichkeit wird jedoch im folgenden lediglich eine Richtung aufgezeigt.

Gleiches gilt für die gemäß Fig. 2 aufgezeigten weiteren Verbindungen WT_{C-B} sowie WT_{C-D}. Die den hier aufgezeigten 3 Verbindungen WT_{A-D}, WT_{C-B} sowie WT_{C-D} zugehörigen ATM-Zellen werden über die jeweils aktiven Betriebsstrecken WE_{A-D}, WE_{C-B} sowie WE_{C-D} übertragen. Die hierzu gehörigen Ersatzstrecken PE_{A-D}, PE_{C-B} sowie PE_{C-D} bleiben zunächst unberührt.

In Fig. 3 ist nun aufgezeigt, wie eine Störung nach Maßgabe des erfindungsgemäßen Verfahrens zu behandeln ist. Dies erfolgt am Beispiel der Verbindung WT_{A-D}. Es wird somit davon ausgegangen, daß der Übertragungsabschnitt zwischen den Vermittlungseinrichtungen N_{A} sowie N_{D} durch eine Störung beeinflußt wird. Es wird weiter davon ausgegangen, daß dies zunächst die einzige Störung im Ring sein soll. Durch Austausch des Ersatzschalteprotokolles ES über die Ersatzstrecke PE_{A-D} wird der Vermittlungseinrichtung N_{A} die Störung mitgeteilt. Nach Maßgabe der Auswertung der lokalen sowie globalen Prioritäten wird nun die Schalteinrichtung S der Vermittlungseinrichtung N_{A} in den verbleibenden Betriebszustand gesteuert. Die der Verbindung WE_{A-D} zugehörigen ATM-Zellen werden nun im folgenden über diese Ersatzstrecke PE_{A-D} sowie die Vermittlungseinrichtungen N_{B} und N_{C} der Vermittlungseinrichtung N_{D} zugeführt, wo sie den Ring verlassen.

Erfindungsgemäß wird nun für zwischen zwei Vermittlungseinrichtungen gelegene Verbindungsabschnitte eine gemeinsame Übertragungskapazität für den gemeinsam genutzten Ersatzweg reserviert. Dies ist möglich, da davon ausgegangen wird, daß lediglich ein Übertragungsabschnitt des Ringes störungsbehaftet ist. Beispielsweise könnte den Verbindungen WT_{A-D}, WT_{C-B} sowie WT_{C-D} jeweils 140 Mbit/sec zugewiesen werden. Für den zwischen den Vermittlungseinrichtungen N_{A}, N_{B} gelegenen Übertragungsabschnitt würden somit für alle 3 Ersatzstrecken 140 MBit/sec zugewiesen werden. Dies bedeutet, daß im Ersatzschaltefall lediglich einer Betriebsstrecke auf der zugeordneten Ersatzstrecke 140 Mbit/s zur Verfügung stehen. Für die zwischen den Vermittlungseinrichtungen N_{B}, N_{C} gelegenen Übertragungsabschnitte gelten ähnliche Überlegungen. Hier wären in gleicher Weise 140 MBit/s zu reservieren, wobei im Ersatzschaltefall lediglich einer Betriebsstrecke auf der zugeordneten Ersatzstrecke ebefalls eine Übertragungskapazität von 140 Mbit/s in vollem Umfang zur Verfügung stehen.

Eine derartige Vorgehensweise hat insbesondere den Vorteil, daß pro Verbindung weniger Gebühren an Übertragungskapazität angemeldet werden müssen. Im Falle einer Dedicated Protection wäre dies anders. Am günstigsten ist der Einspareffekt in dem Falle, wo eine Verbindung zwischen zwei benachbarten Vermittlungseinrichtungen erstellt wird. Dies ist beispielsweise für die Verbindung WT_{A-D} zwischen den Vermittlungseinrichtungen N_{A}, N_{D} der Fall. Der Einspareffekt ist hier deshalb am größten, weil die zugehörigen Ersatzstrecken über die beiden weiteren Vermittlungseinrichtungen N_{B}, N_{C} zur Vermittlungseinrichtung N_{D} geführt werden müssen. Gleiches gilt für die weiteren aufgezeigten Verbindungen WT_{C-D} sowie WT_{C-D}.

Falls die Vermittlungseinrichtung N_{A} als Vermittlungsebene einer höheren Hierarchieebene ausgebildet ist, wäre der Einspareffekt gegenüber einer Dedecated Protection am geringsten. In diesem Fall müßte jeder Verkehr der übrigen Vermittlungseinrichtungen über diese höher gelegene Vermittlungseinrichtung N_{A} geführt werden.

Ein mittlerer Einspareffekt ergäbe sich in dem Falle,daß jede der Vermittlungseinrichtungen im Sinne einer kompletten Vermaschung mit jeder Vermittlungseinrichtung kommunizieren würde.

Wesentlich ist, daß Sonderdaten allgemeiner Art, wie im Zusammenhang gemäß Fig. 1 erläutert, nicht über den Ring übertragen werden können. Dies sind insbesondere die dort angesprochenen Steuerdaten allgemeiner Art. Erfindungsgemäß können jedoch die als Sonderdaten ausgebildeten speziellen Verkehrsdaten aufgrund der ihnen zugewiesenen eigenen Priorität übertragen werden. Beispielsweise kommen hierbei ABR (Available Bit Rate) oder UBR (Unspecified Bit Rate) Verkehrsdaten in Betracht.

Abschließend sei gemäß Fig. 4 beispielhaft ein weiterer Störungsfall aufgezeigt. Hier soll neben einer einfach ausgebildeten Störung, wie sie in Fig. 3 aufgezeigt ist, noch zusätzlich ein Störungsfall auf der Verbindungsstrecke WE_{C-B} erfolgen. In diesem Fall werden weitere Ersatzschalteprotokolle ausgetauscht. In diesem Fall ist jedoch sowohl die Betriebsstrecke als auch die Ersatzstrecke störungsbehaftet. Aufgrund der gemeinsamen Reservierung von Übertragungskapazität für Ersatzstrecken würden bei Ersatzschaltung beider betroffener Betriebsstrecken auf diejeweilige Ersatzstrecke somit auch Verbindungen betroffen, die von der Störung nicht beeinflußt werden. Dies sind in vorliegendem Fall die Verbindungen WT_{C-D}. Da ein Umschalten in diesem Fall keinen Vorteil bringen würde, da auch die Ersatzstrrecke fehlerbehaftet ist, wird somit im Falle des Auftretens von Doppelfehlern auf ein Umschalten verzichtet.

## Patentansprüche

1. Verfahren zum Ersatzschalten von Übertragungseinrichtungen in Ringarchitekturen zur bidirektionalen Übertragung von ATM-Zellen, mit
wenigstens zwei Vermittlungseinrichtungen (N_{A}, N_{D}), die jeweils einen aus Betriebsstrecken (WE_{A-D}, WE_{D-A}) und/oder Ersatzstrecken (PE_{A-D}, PE_{D-A}) gebildeten Übertragungsabschnitt abschließen, und zwischen denen Informationen in ATM-Zellen über diesen Übertragungsabschnitt zugeführt wird, wobei im Falle einer Störung auf dem betreffenden Übertragungsabschnitt die hierüber bislang übertragen ATM-Zellen nach Maßgabe von Prioritätskriterien und logischen Verbindungsinformationen gegebenenfalls auf die Ersatzstrecke umgeleitet werden,
**dadurch gekennzeichnet**,
daß in den Übertragungsabschnitt weitere Vermittlungseinrichtungen (N_{B}, N_{C}) eingebunden werden, und die wenigstens zwei Vermittlungseinrichtungen (N_{A}, N_{D}) zusammengeführt werden.

2. Verfahren nach Anspruch 1,
**dadurch gekennzeichnet**,
daß einer Betriebsstrecke (WE_{A-D}, WE_{C-B}, WE_{C-D}) jeweils eine Ersatzstrecke (PE_{A-D}, PE_{C-B}, PE_{C-D}) zugeordnet ist, wobei eine Mehrzahl von Ersatzstrecken sich eine gemeinsam reservierte Übertragungskapazität teilen können.

3. Verfahren nach Anspruch 1 oder 2,
**dadurch gekennzeichnet**,
daß im Ersatzschaltefall eine Ersatzschalteanforderung generiert wird, der weitere Prioritäten zugewiesen werden.

4. Verfahren nach Anspruch 1,
**dadurch gekennzeichnet**,
daß die logische Verbindungsinformation die Nummer eines virtuellen Kanals (VCI), und/oder die Nummer eines virtuellen Pfades (VPI) und/oder die Nummer einer virtuellen Pfadgruppe (VPG) ist, die aus einer Mehrzahl von virtuellen Pfaden (VPI) gebildet wird.

5. Verfahren nach Anspruch 1 bis 4,
**dadurch gekennzeichnet**,
daß lokale und globale Prioritätstabellen vorgesehen werden, in der die Rangfolge der Prioritäten festgelegt wird.

6. Verfahren nach einem der vorstehenden Ansprüche,
**dadurch gekennzeichnet**,
daß bei Eintreffen einer Ersatzschalteanforderung in der empfangenden Vermittlungseinrichtung ein Ersatzschalteprotokoll generiert wird, das lediglich einmal über die Ersatzstrecke (PE) der sendenden Vermittlungseinrichtung zugeführt wird.

7. Verfahren nach einem der vorstehenden Ansprüche,
**dadurch gekennzeichnet**,
daß Totalaufall und Verschlechterung einer Betriebsstrecke in der Überwachungseinrichtung der empfangenden Vermittlungseinrichtung ermittelt werden.

8. Verfahren nach einem der vorstehenden Ansprüche,
**dadurch gekennzeichnet**,
daß die Vermittlungseinrichtungen als Crossconnect- Schalteinrichtungen ausgebildet sind.

9. Verfahren nach einem der vorstehenden Ansprüche,
**dadurch gekennzeichnet**,
daß die Ersatzschaltung gegebenenfalls durch Ansteuern einer in der sendenden Vermittlungseinrichtung enthaltenden Schaltvorrichtung (S₁) sowie unter Verwendung einer in der empfangenden Vermittlungseinrichtung angeordneten Selektionseinrichtung (SN) erfolgt.

10. Verfahren nach einem der vorstehenden Ansprüche,
**dadurch gekennzeichnet**,
daß über die Ersatzstrecke (PE) in betriebsstörungsfreien Zeiten gegebenenfalls Sonderdaten übertragen werden.

11. Verfahren nach vorstehenden Ansprüche,
**dadurch gekennzeichnet**,
daß Sonderdaten als ABR oder UBR Verkehrsdaten ausgebildet sind.

12. Verfahren nach einem der vorstehenden Ansprüche,
**dadurch gekennzeichnet**,
daß die Selektionseinrichtung (SN) als ATM-Koppelfeld und/ oder als einfaches Schaltelement ausgebildet ist.

13. Verfahren nach einem der vorstehenden Ansprüche,
**dadurch gekennzeichnet**,
daß das Ersatzschalteprotokoll zyklisch zwischen der sendenden Vermittlungseinrichtung sowie der empfangenden Vermittlungseinrichtung ausgetauscht wird.
